# EUROPEAN PATENT SPECIFICATION

(11) **EP 2 545 711 B1**
(45) Date of publication and mention of the grant of the patent: **09.05.2018**
(21) Application number: 11710054.5
(22) Date of filing: 02.03.2011
(51) Int. Cl.: H04N 19/46, H04N 19/61, H04N 19/117, H04N 19/14, H04N 19/182, H04N 19/82

(54) **METHODS AND APPARATUS FOR A CLASSIFICATION-BASED LOOP FILTER**
VERFAHREN UND VORRICHTUNG FÜR KLASSIFIZIERUNGSBASIERTEN SCHLEIFENFILTER
PROCÉDÉS ET APPAREIL POUR UN FILTRE À BOUCLE FONDÉ SUR UNE CLASSIFICATION

(30) Priority: 09.03.2010 US 312063 P
(43) Date of publication of application: 16.01.2013
(73) Proprietor: Thomson Licensing DTV, 92130 Issy-les-Moulineaux (FR)
(72) Inventor: XU, Qian, Folsom, CA 95630 (US); ZHENG, Yunfei, San Diego, CA 92130 (US); YIN, Peng, Ithaca, NY 14850 (US); LU, Xiaoan, Princeton, NJ 08540 (US); SOLE, Joel, La Jolla, CA 92037 (US)
(74) Representative: Rolland, Sophie
(86) International application number: PCT/US2011/000394
(87) International publication number: WO 2011/112237

(56) References cited:
- WO-A1-2008/075247
- WO-A1-2009/158391
- US-A- 5 920 356
- US-A- 5 974 197
- US-A1- 2006 188 017
- US-A1- 2008 152 017
- US-B1- 6 192 161
- US-B1- 6 707 952
- YU LIU ET AL: "Unified Loop Filter for Video Coding", 91. MPEG MEETING; 18-1-2010 - 22-1-2010; KYOTO; (MOTION PICTURE EXPERT GROUP OR ISO/IEC JTC1/SC29/WG11),, 16 January 2010 (2010-01-16), XP030045761,
- CAHILL B ET AL: "Locally adaptive deblocking filter for low bit rate video", IMAGE PROCESSING, 2000. PROCEEDINGS. 2000 INTERNATIONAL CONFERENCE ON SEPTEMBER 10-13, 2000, IEEE, PISCATAWAY, NJ, USA, 10 September 2000 (2000-09-10), pages 664-667VOL.2, XP031534541, ISBN: 978-0-7803-6297-0
- INTEL: "Adaptive (Wiener) Filter for Video Compression", ITU-T SG16 MEETING; 22-4-2008 - 2-5-2008; GENEVA,, 14 April 2008 (2008-04-14), XP030003815,

## Description

### CROSS-REFERENCE TO RELATED APPLICATIONS

This application claims the benefit of U.S. Provisional Application Serial No. 61/312,063, filed March 9, 2010.

### TECHNICAL FIELD

The present principles relate generally to video encoding and decoding and, more particularly, to methods and apparatus for a classification-based loop filter.

### BACKGROUND

Current video coding standards employ block-based transforms (e.g., discrete cosine transforms (DCTs)) and motion compensation to achieve compression efficiency. Due to the lossy nature of compression within this framework, the quality of the reconstructed videos will necessarily be degraded, and never be fully restorable to the original image. Such is the tradeoff made for efficiency gains to be had with lossy video compression.

In the International Organization for Standardization/International Electrotechnical Commission (ISO/IEC) Moving Picture Experts Group-4 (MPEG-4) Part 10 Advanced Video Coding (AVC) Standard/International Telecommunication Union, Telecommunication Sector (ITU-T) H.264 Recommendation (hereinafter the "MPEG-4 AVC Standard"), a deblocking filter is applied to the decoded picture for the purpose of removing blocky artifacts. In the Key Technology Area (KTA) of the MPEG-4 AVC Standard, Wiener filters are used in-loop or out-loop to improve the quality of the decoded pictures.

To achieve temporal adaptation, a Wiener filter is usually estimated for each picture by minimizing the mean square error between the original picture and the decoded picture at the encoder. The filter coefficients are sent to the decoder as overhead for each picture. To achieve spatial adaptation, a picture is partitioned into multiple regions based on content or rate-distortion (RD) cost. In each region, a switch controls the filtering process on or off. The region partition information and the switch control message are sent to the decoder as side information.

This approach works well for video images in which the basic characteristic do not vary greatly over time (from frame to frame). In a first prior art approach, the region partitions are usually equal-size, and in a second prior art approach the region partitions are usually variable-size blocks. However, the block-based methods do not effectively characterize the spatial variations within naturally changing (normal) video. For instance, the visual quality of a video sequence is highly dependent upon the edge sharpness, while the edges within a picture are far from being block-based. More importantly, edges in different directions require different sets of Wiener filters to preserve the sharpness.

In the Key Technology Area of the MPEG-4 AVC Standard, an adaptive post filter was proposed in a third prior art approach. The basic idea is to apply the Wiener filter to the decoded picture before display. The Wiener filter can be estimated for each picture by minimizing the mean square error (MSE) between the original picture and the decoded picture at the encoder. In this case, the estimated filter coefficients are sent to the decoder as overhead. The whole picture is filtered with the estimated filter. In another case, a set of Wiener filters are trained offline, transmitted to or stored at the decoder. During decoding, the picture is filtered pixelwise. At each pixel, a filter is selected from the filter set based on the statistics of the surrounding pixels. In this technique, the filtering indicator does not cost any overhead. The filtering indicator can be derived by the decoded picture content. However, a model between filtering indicator and the picture content is difficult to construct. In the third prior art approach, an offline training scheme is exploited to find the corresponding model between the filtering indicator and the local variance. Since the training is highly dependent on the training set, the model trained with limited data will be inaccurate for more general video signals.

In the first prior art approach, a block-based adaptive loop filter is proposed. In this proposal, a reconstructed frame is restored by a Wiener filter towards the original frame. The Wiener filter coefficients are estimated at the encoder and sent to the decoder as side information. Although a Wiener filter can restore the reconstructed frame to the original frame globally, there are degraded pixels locally. Since the degraded areas reduce the fidelity of the pixels and the predictive efficiency for future coding frames, not filtering these areas will improve the coding performance. In a block adaptive loop filter (BALF), the frame is partitioned into equal-size blocks, and a switch flag is used for each block to control whether or not the block is filtered. In the second prior art approach, a quad-tree adaptive loop filter (QALF) is introduced to indicate whether or not a variable-size block of a frame is filtered. When using the variable-size block scheme, the overhead for coding the size and location of blocks is demanding although the filter performance is better than the equal-size block scheme. However, even the quad-tree based filtering still does not efficiently remove the compression artifacts, as it is unable to capture the spatial characteristics of two-dimensional (2D) data.

Document WO2008075247 discloses a method wherein block pattern of an input image are classified into clusters according to local geometric characteristics, and filtered using control parameters sets defined for each cluster.

Document "Unified Loop filter for video coding", Liu et al., ISO/IEC JTC1/SC29/WG11 MPEG 2010/M17171, January 2010, Kyoto, Japan discloses a method wherein pixels are classified as enhancement pixels or non-enhancement pixels and filtered using a filter according to their classification.

### SUMMARY

These and other drawbacks and disadvantages of the prior art are addressed by the present principles, which are directed to methods and apparatus for a classification-based loop filter.

The invention is defined in the claims. According to an aspect of the present principles, there is provided an apparatus. The apparatus includes a video encoder for encoding an input picture by transforming and quantizing a residue of the input picture to obtain quantized transform coefficients, inverse quantizing and inverse transforming the quantized transform coefficients to obtain a reconstructed version of the residue, and combining at least one reference picture with the reconstructed version of the residue to obtain a reconstructed version of the input picture. The video encoder includes a filter for classifying pixels in the reconstructed version of the input picture within a respective one of a plurality of categories responsive to local geometric characteristics and filtering at least one pixel selected responsive to a corresponding classification of the at least one pixel with respect to the plurality of categories.

According to another aspect of the present principles, there is provided a method in a video encoder. The method includes encoding an input picture. The encoding step includes transforming and quantizing a residue of the input picture to obtain quantized transform coefficients, inverse quantizing and inverse transforming the quantized transform coefficients to obtain a reconstructed version of the residue, combining at least one reference picture with the reconstructed version of the residue to obtain a reconstructed version of the input picture, classifying pixels in the reconstructed version of the input picture within a respective one of a plurality of categories responsive to local geometric characteristics, and filtering at least one pixel selected responsive to a corresponding classification of the at least one pixel with respect to the plurality of categories.

According to yet another aspect of the present principles, there is provided an apparatus. The apparatus includes a video decoder for decoding a picture by receiving quantized transform coefficients, inverse quantizing and inverse transforming the quantized transform coefficients to obtain a reconstructed version of the residue, and combining at least one reference picture with the reconstructed version of the residue to obtain a reconstructed version of the picture. The video decoder includes a filter for classifying pixels in the reconstructed version of the picture within a respective one of a plurality of categories responsive to local geometric characteristics and filtering at least one pixel selected responsive to a corresponding classification of the at least one pixel with respect to the plurality of categories.

According to still another aspect of the present principles, there is provided a method in a video decoder. The method includes decoding a picture. The decoding step includes receiving quantized transform coefficients, inverse quantizing and inverse transforming the quantized transform coefficients to obtain a reconstructed version of the residue, combining at least one reference picture with the reconstructed version of the residue to obtain a reconstructed version of the picture, classifying pixels in the reconstructed version of the picture within a respective one of a plurality of categories responsive to local geometric characteristics, and filtering at least one pixel selected responsive to a corresponding classification of the at least one pixel with respect to the plurality of categories.

These and other aspects, features and advantages of the present principles will become apparent from the following detailed description of exemplary embodiments, which is to be read in connection with the accompanying drawings.

### BRIEF DESCRIPTION OF THE DRAWINGS

The present principles may be better understood in accordance with the following exemplary figures, in which:
FIG. 1 is a block diagram showing an exemplary video encoder to which the present principles may be applied, in accordance with an embodiment of the present principles;
FIG. 2 is a block diagram showing an exemplary video decoder to which the present principles may be applied, in accordance with an embodiment of the present principles;
FIG. 3 is a flow diagram showing an exemplary method for encoding picture data for an input picture using a classification-based loop filter, in accordance with an embodiment of the present principles;
FIG. 4 is a flow diagram showing an exemplary method for decoding picture data for a picture using a classification-based loop filter, in accordance with an embodiment of the present principles;
FIG. 5 is a flow diagram showing another exemplary method for encoding picture data for an input picture using a classification-based loop filter, in accordance with an embodiment of the present principles;
FIG. 6 is a flow diagram showing another exemplary method for decoding picture data for a picture using a classification-based loop filter, in accordance with an embodiment of the present principles;
FIG. 7 is a flow diagram showing yet an exemplary method for encoding picture data for an input picture using a classification-based loop filter, in accordance with an embodiment of the present principles; and
FIG. 8 is a flow diagram showing yet another exemplary method for decoding picture data for a picture using a classification-based loop filter, in accordance with an embodiment of the present principles.

### DETAILED DESCRIPTION

The present principles are directed to methods and apparatus for a classification-based loop filter.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Moreover, as used herein, the words "picture" and "image" are used interchangeably and refer to a still image or a picture from a video sequence. As is known, a picture may be a frame or a field.

Further, as used herein, "high level syntax" refers to syntax present in the bitstream that resides hierarchically above the macroblock layer. For example, high level syntax, as used herein, may refer to, but is not limited to, syntax at the slice header level, Supplemental Enhancement Information (SEI) level, Picture Parameter Set (PPS) level, Sequence Parameter Set (SPS) level and Network Abstraction Layer (NAL) unit header level.

Also, as used herein, the phrase "wherein filter coefficients are adaptively trained on a picture basis" refers to training filter coefficients for the classification-based loop filter on a picture by picture basis. That is, such coefficients are trained while considering properties of an entire picture, and while considering more than one picture.

Additionally, as used herein, the phrase "wherein the filter coefficients are trained offline" refers to training the filter coefficients for the classification-based loop filter at a different time than the time during which the filter is being applied to a particular pixel of a particular pixel. Thus, offline may refer to a time prior to processing a particular video sequence to which such picture belongs.

For purposes of illustration and description, examples are described herein in the context of improvements over the MPEG-4 AVC Standard, using the MPEG-4 AVC Standard as the baseline for our description and explaining the improvements and extensions beyond the MPEG-4 AVC Standard. However, it is to be appreciated that the present principles are not limited solely to the MPEG-4 AVC Standard and/or extensions thereof. Given the teachings of the present principles provided herein, one of ordinary skill in this and related arts would readily understand that the present principles are equally applicable and would provide at least similar benefits when applied to extensions of other standards, or when applied and/or incorporated within standards not yet developed. It is to be further appreciated that the present principles also apply to video encoders and video decoders that do not conform to standards, but rather confirm to proprietary definitions.

Also for purposes of illustration and description, examples are described herein in the context of the well-known Wiener filter. However, it is to be appreciated that the present principles are applicable to any type of filter capable of being applied to one or more pixels and/or pixel data. For example, it is to be appreciated that in some embodiments of the present principles, one filter type (e.g., a Wiener filter) may be selected and coefficients determined for pixels categorized in one group, and another filter type (a non-Wiener filter) may be selected and coefficients determined for pixels categorized in another group. These and other variations of the present principles described herein are readily determined by one of ordinary skill in this and related arts, given the teachings of the present principles provided herein.

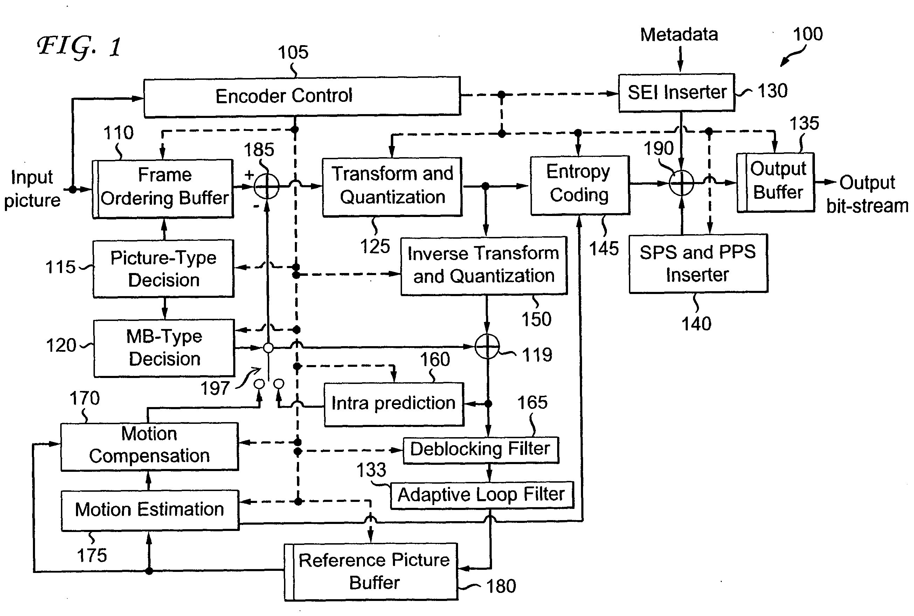

Turning to FIG. 1, an exemplary video encoder to which the present principles may be applied is indicated generally by the reference numeral 100. The video encoder 100 includes a frame ordering buffer 110 having an output in signal communication with a non-inverting input of a combiner 185. An output of the combiner 185 is connected in signal communication with a first input of a transformer and quantizer 125. An output of the transformer and quantizer 125 is connected in signal communication with a first input of an entropy coder 145 and a first input of an inverse transformer and inverse quantizer 150. An output of the entropy coder 145 is connected in signal communication with a first non-inverting input of a combiner 190. An output of the combiner 190 is connected in signal communication with a first input of an output buffer 135.

A first output of an encoder controller 105 is connected in signal communication with a second input of the frame ordering buffer 110, a second input of the inverse transformer and inverse quantizer 150, an input of a picture-type decision module 115, a first input of a macroblock-type (MB-type) decision module 120, a second input of an intra prediction module 160, a second input of a deblocking filter 165, a first input of a motion compensator 170, a first input of a motion estimator 175, and a second input of a reference picture buffer 180.

A second output of the encoder controller 105 is connected in signal communication with a first input of a Supplemental Enhancement Information (SEI) inserter 130, a second input of the transformer and quantizer 125, a second input of the entropy coder 145, a second input of the output buffer 135, and an input of the Sequence Parameter Set (SPS) and Picture Parameter Set (PPS) inserter 140.

An output of the SEI inserter 130 is connected in signal communication with a second non-inverting input of the combiner 190.

A first output of the picture-type decision module 115 is connected in signal communication with a third input of the frame ordering buffer 110. A second output of the picture-type decision module 115 is connected in signal communication with a second input of a macroblock-type decision module 120.

An output of the Sequence Parameter Set (SPS) and Picture Parameter Set (PPS) inserter 140 is connected in signal communication with a third non-inverting input of the combiner 190.

An output of the inverse quantizer and inverse transformer 150 is connected in signal communication with a first non-inverting input of a combiner 119. An output of the combiner 119 is connected in signal communication with a first input of the intra prediction module 160 and a first input of the deblocking filter 165. An output of the deblocking filter 165 is connected in signal communication with an input of an adaptive loop filter 133. An output of the adaptive loop filter is connected in signal communication with a first input of a reference picture buffer 180. An output of the reference picture buffer 180 is connected in signal communication with a second input of the motion estimator 175 and a third input of the motion compensator 170. A first output of the motion estimator 175 is connected in signal communication with a second input of the motion compensator 170. A second output of the motion estimator 175 is connected in signal communication with a third input of the entropy coder 145.

An output of the motion compensator 170 is connected in signal communication with a first input of a switch 197. An output of the intra prediction module 160 is connected in signal communication with a second input of the switch 197. An output of the macroblock-type decision module 120 is connected in signal communication with a third input of the switch 197. The third input of the switch 197 determines whether or not the "data" input of the switch (as compared to the control input, i.e., the third input) is to be provided by the motion compensator 170 or the intra prediction module 160. The output of the switch 197 is connected in signal communication with a second non-inverting input of the combiner 119 and an inverting input of the combiner 185.

A first input of the frame ordering buffer 110 and an input of the encoder controller 105 are available as inputs of the encoder 100, for receiving an input picture. Moreover, a second input of the Supplemental Enhancement Information (SEI) inserter 130 is available as an input of the encoder 100, for receiving metadata. An output of the output buffer 135 is available as an output of the encoder 100, for outputting a bitstream.

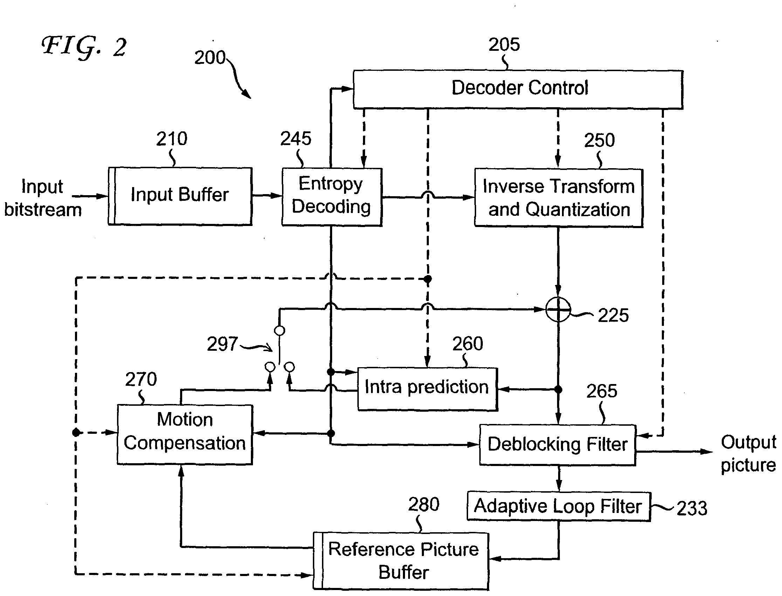

Turning to FIG. 2, an exemplary video decoder to which the present principles may be applied is indicated generally by the reference numeral 200. The video decoder 200 includes an input buffer 210 having an output connected in signal communication with a first input of an entropy decoder 245. A first output of the entropy decoder 245 is connected in signal communication with a first input of an inverse transformer and inverse quantizer 250. An output of the inverse transformer and inverse quantizer 250 is connected in signal communication with a second non-inverting input of a combiner 225. An output of the combiner 225 is connected in signal communication with a second input of a deblocking filter 265 and a first input of an intra prediction module 260. A second output of the deblocking filter 265 is connected in signal communication with an input of an adaptive loop filter 233. An output of the adaptive loop filter 233 is connected in signal communication with a first input of a reference picture buffer 280. An output of the reference picture buffer 280 is connected in signal communication with a second input of a motion compensator 270.

A second output of the entropy decoder 245 is connected in signal communication with a third input of the motion compensator 270, a first input of the deblocking filter 265, and a third input of the intra predictor 260. A third output of the entropy decoder 245 is connected in signal communication with an input of a decoder controller 205. A first output of the decoder controller 205 is connected in signal communication with a second input of the entropy decoder 245. A second output of the decoder controller 205 is connected in signal communication with a second input of the inverse transformer and inverse quantizer 250. A third output of the decoder controller 205 is connected in signal communication with a third input of the deblocking filter 265. A fourth output of the decoder controller 205 is connected in signal communication with a second input of the intra prediction module 260, a first input of the motion compensator 270, and a second input of the reference picture buffer 280.

An output of the motion compensator 270 is connected in signal communication with a first input of a switch 297. An output of the intra prediction module 260 is connected in signal communication with a second input of the switch 297. An output of the switch 297 is connected in signal communication with a first non-inverting input of the combiner 225.

An input of the input buffer 210 is available as an input of the decoder 200, for receiving an input bitstream. A first output of the deblocking filter 265 is available as an output of the decoder 200, for outputting an output picture.

As noted above, the present principles are directed to methods and apparatus for a classification-based loop filter. As previously described, the prior art filtering approaches tend to work well for non-changing (non-natural) video signals. Also as previously described, prior art methods usually utilize partitions that are equal-sized or variable-size blocks. However, block-based methods do not effectively characterize the spatial variations within natural (normal) image and videos. For example, the visual quality of a video sequence is highly dependent upon the edge sharpness, while the edges within a picture are far from being block-based. More importantly, edges in different directions require different sets of filters to preserve the sharpness. In order to solve these problems, we propose a classification-based approach to improve the filter.

In accordance with an embodiment of the present principles, in a video encoder, a method and apparatus are disclosed and described for video encoding in which the prediction error of an image is first transformed into transform coefficients. The transformed coefficients are then quantized. The previously quantized, transformed coefficients are inverse quantized and inverse transformed, resulting in a reconstructed prediction error image. A reconstructed image is generated by combining the reconstructed prediction error image and the prediction image. Then, pixels are classified within a group or category, responsive to local geometric characteristics, such as edge orientation. In an embodiment in which classification is based upon orientation, for example, edge detection of the reconstructed image is performed and pixels at the edge are classified within a group or category based upon orientation. A filter is applied to a specified pixel, the filter selected responsive to a pixel classification within a group or category.

In accordance with an embodiment of the present principles, in a video decoder, a method and apparatus are disclosed and described for video decoding in which entropy coded quantized, transformed coefficients are received, and then inverse quantized and inverse transformed, resulting in a reconstructed prediction error image. A reconstructed image is generated by combining the reconstructed prediction error image and the prediction image. Then, pixels are classified within a group or category, responsive to local geometric characteristics. In an embodiment in which classification is based upon orientation, for example, edge detection of the reconstructed image is performed and pixels at the edge are classified within a group or category based upon orientation. A filter is applied to a specified pixel, the filter selected responsive to a pixel classification within a group or category.

A pixel is filtered by a filter whose structure (coefficients) have been selected for all pixels categorized within that group. Filters are constructed differently for pixels belonging to different groups/categories.

In current video coding frameworks, filtering techniques are usually used to remove compression artifacts or for anti-aliasing. Such filtering techniques can be used as in-loop or out-loop in many video compression applications. Due to the changing nature of video signals, the filtering processes are expected to be adaptive in both the spatial and temporal domains. Many block-based adaptive filters have been proposed to achieve spatial adaptation when removing compression artifacts. In accordance with the present principles, we disclose and describe methods and apparatus having improved performance in that adaptive filters are used which have a pixel characteristic-based adaptability. Specifically, the video frame is applied with edge detection and pixels at the detected edges are classified into different groups or categories based on edge orientation. Then a pixel is filtered by a filter whose structure (coefficients) have been selected for all pixels categorized within a specific group. Filters are constructed differently for pixels belonging to different groups/categories. Filter coefficients can be adaptively selected frame by frame, and the coefficients can be signaled from the encoder to the decoder. In an alternative embodiment, filter coefficients for each category can be selected offline, and stored at both the encoder and decoder.

In one embodiment, edge detection is performed over the input picture to be filtered. Pixels that are determined to be edges are further classified into different categories based on the edge orientations. For each category, a set of Wiener filter coefficients (or other type of filter coefficients) are computed by minimizing the mean squared error (MSE) between the original picture and the input picture to be processed for pixels within this category. The filter coefficients for each category can be trained frame by frame adaptively and signaled using a high level syntax.

For pixels in the rest of picture that are not determined as edges, another set of filter coefficients are computed before filtering. At the decoder, similar edge detection and classification are performed over the picture before filtering the edge pixels by category and also the rest of the picture.

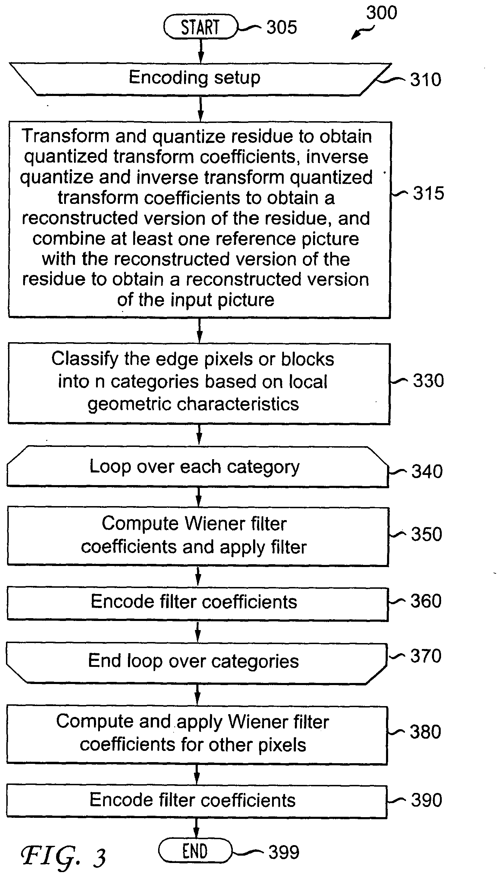

Turning to FIG. 3, an exemplary method for encoding picture data for an input picture using a classification-based loop filter is indicated generally by the reference numeral 300. The method 300 includes a start block 305 that passes control to a function block 310. The function block 310 performs an encoding setup, and passes control to a function block 315. The function block 315 transforms and quantizes a residue of the input picture to obtain quantized transform coefficients, inverse quantizes and inverse transforms the quantized transform coefficients to obtain a reconstructed version of the residue, combines at least one reference picture with the reconstructed version of the residue to obtain a reconstructed version of the input picture, and passes control to a function block 330. The function block 330 classifies the edge pixels or blocks in the reconstructed version of the input picture into n categories based on local geometric characteristics, and passes control to a loop limit block 340. The loop limit block 340 loops over each category, and passes control to a function block 350. The function block 350 computes the Wiener filter coefficients, applies the filter to the edge pixels or blocks within the specific class indicated by the loop index, and passes control to a function block 360. The function block 360 encodes the filter coefficients, and passes control to a loop limit block 370. The loop limit block 370 ends the loop over each of the categories, and passes control to a function block 380. The function block 380 computes and applies Wiener filter coefficients for other (i.e., non-edge) pixels, and passes control to a function block 390. The function block 390 encodes the filter coefficients (for the other pixels), and passes control to an end block 399.

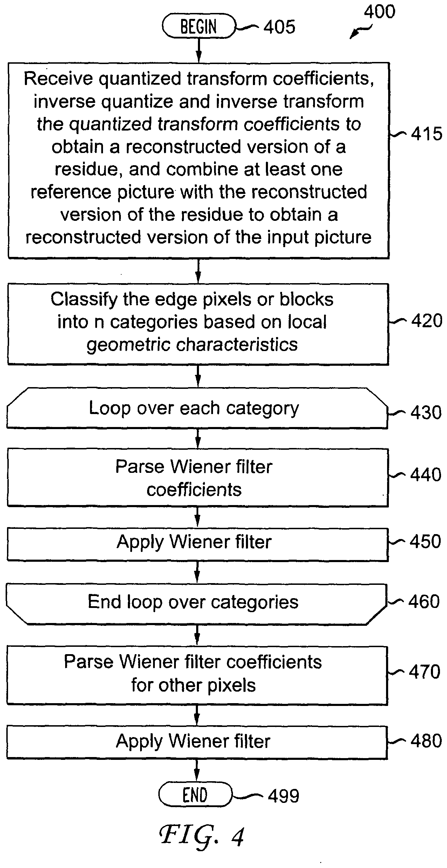

Turning to FIG. 4, an exemplary method for decoding picture data for a picture using a classification-based loop filter is indicated generally by the reference numeral 400. The method 400 includes a start block 405 that passes control to a function block 415. The function block 415 receives quantized transform coefficients, inverse quantizes and inverse transforms the quantized transform coefficients to obtain a reconstructed version of a residue, combines at least one reference picture with the reconstructed version of the residue to obtain a reconstructed version of the picture, and passes control to a function block 420. The function block 420 classifies the edge pixels or blocks in the reconstructed version of the picture into n categories based on local geometric characteristics, and passes control to a loop limit block 430. The loop limit block 430 begins a loop over each category, and passes control to a function block 440. The function block 440 parses the Wiener filter coefficients, and passes control to a function block 450. The function block 450 applies the Wiener filter to the edge pixels or blocks within the specific class indicated by the loop index, and passes control to a loop limit block 460. The loop limit block 460 ends the loop over the categories, and passes control to a function block 470. The function block 470 parses the Wiener filter coefficients for other (i.e., non-edge) pixels, and passes control to a function block 480. The function block 480 applies the Wiener filter (for the other pixels), and passes control to an end block 499.

In another embodiment, the signaling overhead can be avoided. In such a case, the filters can be trained offline with a set of sequences and stored at both the encoder and decoder.

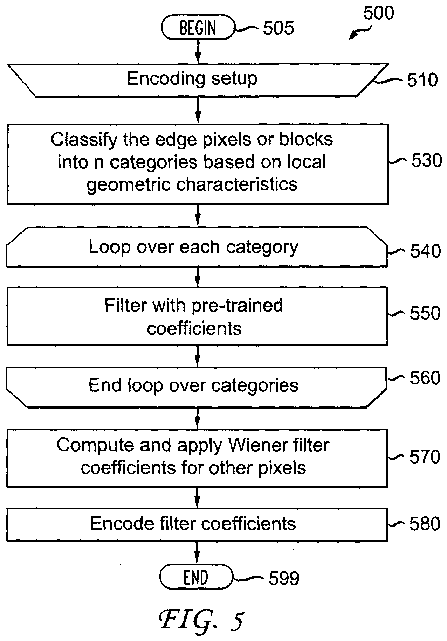

Turning to FIG. 5, another exemplary method for encoding picture data for an input picture using a classification-based loop filter is indicated generally by the reference numeral 500. The method 500 includes a start block 505 that passes control to a function block 510. The function block 510 performs an encoding setup, and passes control to a function block 530. While not explicitly shown we note, as would be readily apparent to one of ordinary skill in this and related arts, that method 500 also includes similar steps to those shown with respect to function block 315 of Figure 3, prior to the classification performed by function block 530. The function block 530 classifies the edge pixels or blocks in the reconstructed version of the input picture into n categories based on local geometric characteristics, and passes control to a loop limit block 540. The loop limit block 540 begins a loop over each category, and passes control to a function block 550. The function block 550 filters the edge pixels or blocks with the pre-trained coefficients for the class, and passes control to a loop limit block 560. The loop limit block 560 ends the loop over the categories, and passes control to a function block 570. The function block 570 computes and applies the Wiener filter coefficients for other (i.e., non-edge) pixels, and passes control to a function block 580. The function block 580 encodes the filter coefficients, and passes control to an end block 599.

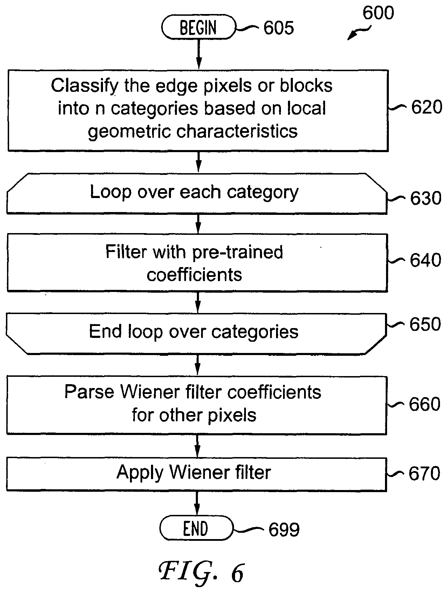

Turning to FIG. 6, another exemplary method for decoding picture data for a picture using a classification-based loop filter is indicated generally by the reference numeral 600. The method 600 includes a start block 605 that passes control to a function block 620. While not explicitly shown we note, as would be readily apparent to one of ordinary skill in this and related arts, that method 600 also includes similar steps to those shown with respect to function block 415 of Figure 4, prior to the classification performed by function block 620. The function block 620 classifies the edge pixels or blocks in the reconstructed version of the picture into n categories based on local geometric characteristics, and passes control to a loop limit block 630. The loop limit block 630 begins a loop over each category, and passes control to a loop limit block 640. The loop limit block 640 filters the edge pixels or blocks with the pre-trained coefficients for the class, and passes control to a loop limit block 650. The loop limit block 650 ends the loop over the categories, and passes control to a function block 660. The function block 660 parses the Wiener filter coefficients for other (i.e., non-edge) pixels, and passes control to a function block 670. The function block 670 applies the Wiener filter (for the other pixels), and passes control to an end block 699.

In another embodiment, the classification-based Wiener filtering is combined with BALF or QALF, which decides for each pixel whether or not to perform filtering. If BALF or QALF decides to filter a block, then the pixels that are detected as edges will be filtered with the specifically trained filter for the categories to which they belong.

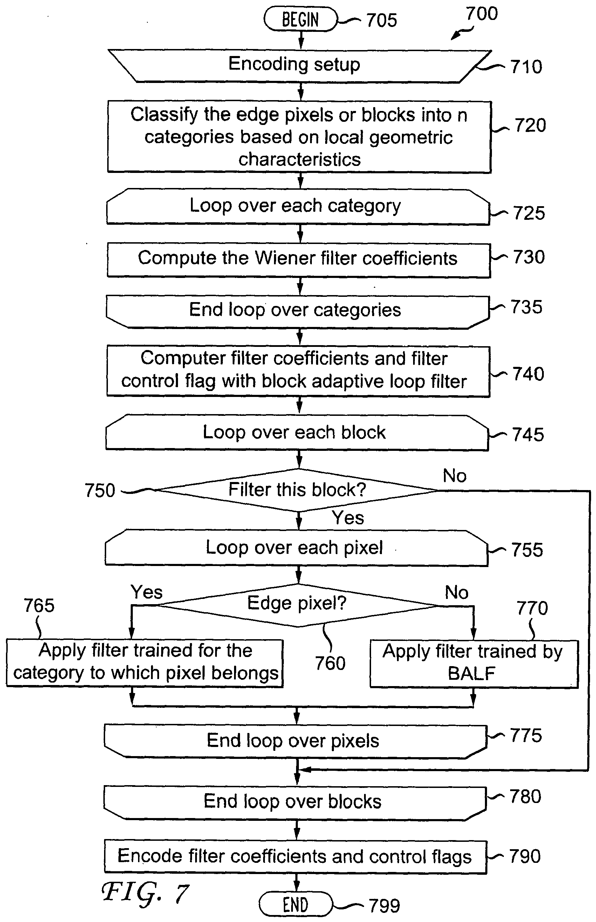

Turning to FIG. 7, yet an exemplary method for encoding picture data for an input picture using a classification-based loop filter is indicated generally by the reference numeral 700. The method 700 includes a start block 705 that passes control to a function block 710: The function block 710 performs an encoding setup, and passes control to a function block 720. While not explicitly shown we note, as would be readily apparent to one of ordinary skill in this and related arts, that method 700 also includes similar steps to those shown with respect to function block 315 of Figure 3, prior to the classification performed by function block 720. The function block 720 classifies the edge pixels or blocks in the reconstructed version of the input picture into n categories based on local geometric characteristics, and passes control to a loop limit block 725. The loop limit block 725 loops over each category, and passes control to a function block 730. The function block 730 computes the Wiener filter coefficients for each category, and passes control to a loop limit block 735. The loop limit block 735 ends the loop over the categories, and passes control to a function block 740. The function block 740 computes filter coefficients and a filter control flag with a block adaptive loop filter, and passes control to a loop limit block 745. The loop limit block 745 ends the loop over each block, and passes control to a decision block 750. The decision block 750 determines whether or not to filter this (the current) block. If so, then control is passed to a loop limit block 755. Otherwise, control is passed to a loop limit block 780. The loop limit block 755 begins a loop over each pixel in the current block, and passes control to a decision block 760. The decision block 760 determines whether or not the current pixel is an edge pixel. If so, then control is passed to a function block 765. Otherwise, control is passed to a function block 770. The function block 765 applies a filter trained for the category to which the pixel belongs, and passes control to a loop limit block 775. The function block 770 applies a filter trained by BALF or QALF, and passes control to the loop limit block 775. The loop limit block 775 ends the loop over the pixels, and passes control to the loop limit block 780. The loop limit block 780 ends the loop over the blocks, and passes control to a function block 790. The function block 790 encodes the filter coefficients and control flags, and passes control to an end block 799.

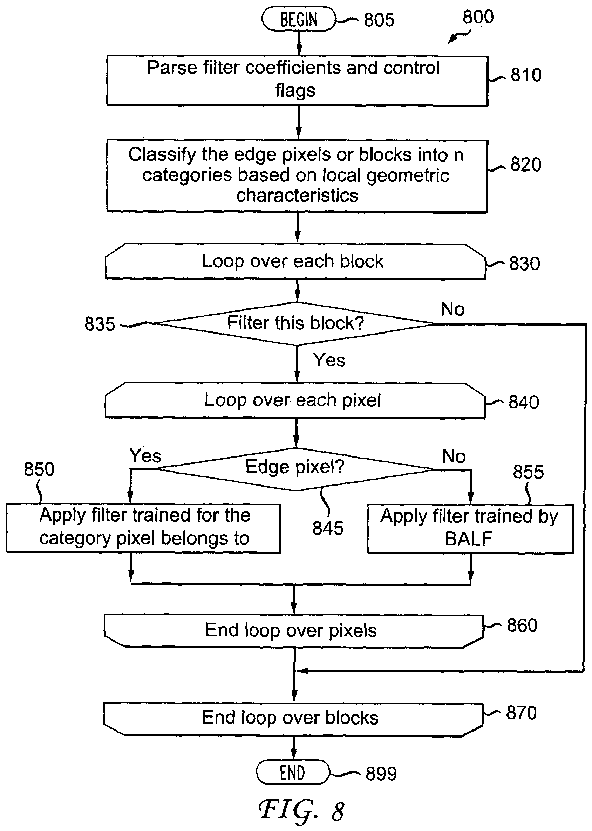

Turning to FIG. 8, yet another exemplary method for decoding picture data for a picture using a classification-based loop filter is indicated generally by the reference numeral 800. The method 800 includes a start block 805 that passes control to a function block 810. The function block 810 parses filter coefficients and control flags, and passes control to a function block 820. While not explicitly shown we note, as would be readily apparent to one of ordinary skill in this and related arts, that method 800 also includes similar steps to those shown with respect to function block 415 of Figure 4, prior to the classification performed by function block 820. The function block 820 classifies the edge pixels or blocks in the reconstructed version of the picture into n categories based on local geometric characteristics, and passes control to a loop limit block 830. The loop limit block 830 begins a loop over each block, and passes control to a decision block 835. The decision block 835 determines whether or not to filter this (the current) block. If so, then control is passed to a loop limit block 840. Otherwise, control is passed to a loop limit block 870. The loop limit block 840 begins a loop over each pixel in the current block, and passes control to a decision block 845. The decision block 845 determines whether or not the current pixel is an edge pixel. If so, then control is passed to a function block 850. Otherwise, control is passed to a function block 855. The function block 850 applies the filter trained for the category to which the pixel belongs, and passes control to a loop limit block 860. The function block 855 applies a filter trained by BALF or QALF, and passes control to the loop limit block 860. The loop limit block 860 ends the loop over the pixels, and passes control to the loop limit block 870. The loop limit block 870 ends the loop over the blocks, and passes control to an end block 899.

### Syntax

TABLE 1 shows exemplary slice header syntax in accordance with an embodiment of the present principles.

The semantics of the syntax elements in TABLE 1 are as follows:
**edge_filter_flag** equal to 1 specifies that edge orientation based filtering is used for the slice. edge_filter_flag equal to 0 specifies that edge orientation based filtering is not used, which means that all pixels in the slice will use the same filter.
**num_edge_dir** specifies total number of edge directions.
**edge_dir_used_flag[i]** equal to 1 specifies that the filter in the i^{th} direction is used, edge_dir_used_flag[i] equals to 0 specifies that the filter in the i^{th} direction is not used.
**filter_coeff[i]** specified the coefficients for the filter in the i^{th} direction.

**TABLE 1**

| slice_ header() { | **Descriptor** |
|---|---|
| ... | |
| **edge**_**filter_flag** | u(1) |
| If (edge_fitter_flag==1){ | |
| **num_edge_dir** | u(v) |
| For (i=0; i<num_edge_dir; i++){ | |
| **edge_dir_used_flag**[i] | u(1) |
| If (edge_dir_used_flag[i] == 1){ | |
| **filter_coeff[i]** | u(v) |
| } | |
| } | |
| } | |
| ... | |
| } | |

A description will now be given of some of the many attendant advantages/features of the present invention, some of which have been mentioned above. For example, one advantage/feature is an apparatus having a video encoder for encoding an input picture by transforming and quantizing a residue of the input picture to obtain quantized transform coefficients, inverse quantizing and inverse transforming the quantized transform coefficients to obtain a reconstructed version of the residue, and combining at least one reference picture with the reconstructed version of the residue to obtain a reconstructed version of the input picture. The video encoder includes a filter for classifying pixels in the reconstructed version of the input picture within a respective one of a plurality of categories responsive to local geometric characteristics and filtering at least one pixel selected responsive to a corresponding classification of the at least one pixel with respect to the plurality of categories.

Another advantage/feature is the apparatus having the video encoder as described above, wherein filter coefficients are adaptive and are selected responsive to providing an improved performance of filtering within at least one of the plurality of categories.

Yet another advantage/feature is the apparatus having the video encoder wherein filter coefficients are adaptive and are selected responsive to providing an improved performance of filtering within at least one of the plurality of categories as described above, wherein the improved performance is provided by minimizing a distortion measure between the input picture and the reconstructed version of the input picture.

Still another advantage/feature is the apparatus having the video encoder as described above, wherein the classification of the at least one pixel is determined responsive to an edge orientation corresponding thereto.

Moreover, another advantage/feature is the apparatus having the video encoder as described above, wherein filter coefficients are adaptively trained on a picture basis and signaled using one or more high level syntax elements.

Further, another advantage/feature is the apparatus having the video encoder as described above, wherein filter coefficients are trained offline and stored at both the encoder and a corresponding decoder.

Also, another advantage/feature is the apparatus having the video encoder as described above, wherein the filtering is jointly performed with block adaptive loop filtering or quad-tree adaptive loop filtering.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

## Claims

1. An apparatus, comprising:
a video encoder (100) for encoding an input picture by transforming and quantizing a residue of the input picture to obtain quantized transform coefficients, inverse quantizing and inverse transforming the quantized transform coefficients to obtain a reconstructed version of the residue, and combining at least one reference picture with the reconstructed version of the residue to obtain a reconstructed version of the input picture, and, wherein said video encoder is configured for classifying pixels in the reconstructed version of the input picture within a respective one of a plurality of categories responsive to local geometric characteristics, and wherein said video encoder includes a filter (133) for filtering pixels in the reconstructed version of the input picture, said apparatus being **characterized in that**:
- classifying pixels is performed by applying edge detection to the reconstructed version of the input picture, and classifying pixels at detected edges into different categories based on edge orientation; and
- filtering is performed for non detected edge pixels by block adaptive loop filtering or quad-tree adaptive loop filtering and for detected edge pixels by an adaptive filter whose structure has been selected for all pixels categorized within a specific category.

2. In a video encoder, a method, comprising:
encoding an input picture,
wherein said encoding step comprises:
transforming and quantizing (315) a residue of the input picture to obtain quantized transform coefficients;
inverse quantizing and inverse transforming (315) the quantized transform coefficients to obtain a reconstructed version of the residue;
combining (315) at least one reference picture with the reconstructed version of the residue to obtain a reconstructed version of the input picture;
classifying (330, 530, 720) pixels in the reconstructed version of the input picture within a respective one of a plurality of categories responsive to local geometric characteristics,
filtering (350, 550, 765) pixels in the reconstructed version of the input picture,
said method being **characterized in that**:
- classifying is performed by applying edge detection to the reconstructed version of the input picture, and classifying pixels at detected edges into different categories based on edge orientation; and
- filtering is performed for non detected edge pixels by a filter trained by block adaptive loop filtering or quad-tree adaptive loop filtering and for detected edge pixels by an adaptive filter whose structure has been selected for all pixels categorized within a specific category.

3. An apparatus, comprising:
a video decoder (200) for decoding a picture by receiving quantized transform coefficients, inverse quantizing and inverse transforming the quantized transform coefficients to obtain a reconstructed version of the residue, and combining at least one reference picture with the reconstructed version of the residue to obtain a reconstructed version of the picture, and, wherein said video decoder is configured for classifying pixels in the reconstructed version of the picture within a respective one of a plurality of categories responsive to local geometric characteristics, and wherein said decoder includes a filter (233) for filtering pixels in the reconstructed version of the picture, said apparatus being **characterized in that**:
- classifying is performed by applying edge detection to the reconstructed version of the picture and classifying pixels at detected edges into different categories based on edge orientation; and
- filtering is performed for non detected edge pixels by a filter trained by block adaptive loop filtering or quad-tree adaptive loop filtering and for detected edge pixels by an adaptive filter whose structure has been selected for all pixels categorized within a specific category.

4. The apparatus of claims 1 or 3, wherein filter coefficients are adaptive and are selected responsive to providing an improved performance of filtering within at least one of the plurality of categories.

5. The apparatus of claim 4, wherein the improved performance is provided by minimizing a distortion measure between the picture and the reconstructed version of the picture.

6. The apparatus of claims 1 or 3, wherein filter coefficients are adaptively trained on a picture basis and signaled using one or more high level syntax elements.

7. The apparatus of claims 1 or 3, wherein filter coefficients are trained offline and stored at both the encoder and a corresponding decoder.

8. In a video decoder, a method, comprising:
decoding a picture,
wherein said decoding step comprises:
receiving (415) quantized transform coefficients;
inverse quantizing and inverse transforming (415) the quantized transform coefficients to obtain a reconstructed version of the residue;
combining (415) at least one reference picture with the reconstructed version of the residue to obtain a reconstructed version of the picture;
classifying (420, 620, 820) pixels in the reconstructed version of the picture within a respective one of a plurality of categories responsive to local geometric characteristics,
filtering (450, 640, 850) pixels in the reconstructed version of the picture,
said method being **characterized in that**:
- classifying is performed by applying edge detection to the reconstructed version of the picture, and classifying pixels at detected edges into different categories based on edge orientation; and
- filtering is performed for non detected edge pixels by a filter trained by block adaptive loop filtering or quad-tree adaptive loop filtering and for detected edge pixels by an adaptive filter whose structure has been selected for all pixels categorized within a specific category.

9. The method of claims 2 or 10, wherein filter coefficients are adaptive and are selected responsive to providing an improved performance of filtering within at least one of the plurality of categories.

10. The method of claim 9, wherein the improved performance is provided by minimizing a distortion measure between the picture and the reconstructed version of the picture.

11. The method of claims 2 or 8, wherein filter coefficients are adaptively trained on a picture basis and signaled using one or more high level syntax elements.

12. The method of claims 2 or 8, wherein filter coefficients are trained offline and stored at both the encoder and a corresponding decoder.

13. A computer readable non-transitory storage media having video signal data encoded thereupon, comprising:
an input picture encoded by transforming and quantizing a residue of the input picture to obtain quantized transform coefficients, inverse quantizing and inverse transforming the quantized transform coefficients to obtain a reconstructed version of the residue, combining at least one reference picture with the reconstructed version of the residue to obtain a reconstructed version of the input picture, classifying pixels in the reconstructed version of the input picture within a respective one of a plurality of categories responsive to local geometric characteristics, and filtering pixels in the reconstructed version of the input picture,
said computer readable non-transitory storage media being **characterized in that**:
- classifying is performed by applying edge detection to the reconstructed version of the input picture, and classifying pixels at detected edges into different categories based on edge orientation; and
- filtering is performed for non detected edge pixels by a filter trained by block adaptive loop filtering or quad-tree adaptive loop filtering and for detected edge pixels by an adaptive filter whose structure has been selected for all pixels categorized within a specific category.

## Patentansprüche

1. Vorrichtung, die umfasst:
einen Videocodierer (100) zum Codieren eines Eingangsbilds durch Transformieren und Quantisieren eines Rests des Eingangsbilds, um quantisierte Transformationskoeffizienten zu erhalten, durch inverses Quantisieren und inverses Transformieren der quantisierten Transformationskoeffizienten, um eine rekonstruierte Version des Rests zu erhalten, und durch Kombinieren mindestens eines Referenzbilds mit der rekonstruierten Version des Rests, um eine rekonstruierte Version des Eingangsbilds zu erhalten, und wobei der Videocodierer dafür konfiguriert ist, Pixel in der rekonstruierten Version des Eingangsbilds in Reaktion auf lokale geometrische Eigenschaften innerhalb einer jeweiligen von mehreren Kategorien zu klassifizieren, und wobei der Videocodierer ein Filter (133) zum Filtern von Pixeln in der rekonstruierten Version des Eingangsbilds enthält, wobei die Vorrichtung **dadurch gekennzeichnet ist, dass**
- das Klassifizieren von Pixeln durch Anwenden einer Kantenerkennung auf die rekonstruierte Version des Eingangsbilds und durch das Klassifizieren von Pixeln bei erkannten Kanten in unterschiedliche Kategorien auf der Grundlage der Kantenorientierung ausgeführt wird; und
- das Filtern für nicht erkannte Kantenpixel durch Block-adaptive Schleifenfilterung oder durch Quadtree-adaptive Schleifenfilterung und für erkannte Kantenpixel durch ein adaptives Filter, dessen Struktur für alle innerhalb einer spezifischen Kategorie klassifizierte Pixel gewählt worden ist, ausgeführt wird.

2. Verfahren in einem Videocodierer, wobei das Verfahren umfasst:
Codieren eines Eingangsbilds,
wobei der Schritt des Codierens umfasst:
Transformieren und Quantisieren (315) eines Rests des Eingangsbilds, um quantisierte Transformationskoeffizienten zu erhalten;
inverses Quantisieren und inverses Transformieren (315) der quantisierten Transformationskoeffizienten, um eine rekonstruierte Version des Rests zu erhalten;
Kombinieren (315) mindestens eines Referenzbilds mit der rekonstruierten Version des Rests, um eine rekonstruierte Version des Eingangsbilds zu erhalten;
Klassifizieren (330, 530, 720) von Pixeln in der rekonstruierten Version des Eingangsbilds innerhalb einer jeweiligen von mehreren Kategorien in Reaktion auf lokale geometrische Eigenschaften,
Filtern (350, 550, 765) von Pixeln in der rekonstruierten Version des Eingangsbilds,
wobei das Verfahren **dadurch gekennzeichnet ist, dass**
- das Klassifizieren durch Anwenden einer Kantenerkennung auf die rekonstruierte Version des Eingangsbilds und durch das Klassifizieren von Pixeln bei erkannten Kanten in unterschiedliche Kategorien auf der Grundlage der Kantenorientierung ausgeführt wird; und
- das Filtern für nicht erkannte Kantenpixel durch ein Filter, das durch Block-adaptive Schleifenfilterung oder durch Quadtree-adaptive Schleifenfilterung trainiert worden ist, und für erkannte Kantenpixel durch ein adaptives Filter, dessen Struktur für alle innerhalb einer spezifischen Kategorie klassifizierte Pixel gewählt worden ist, ausgeführt wird.

3. Vorrichtung, die umfasst:
einen Videodecodierer (200) zum Decodieren eines Bilds durch Empfangen quantisierter Transformationskoeffizienten, durch inverses Quantisieren und inverses Transformieren der quantisierten Transformationskoeffizienten, um eine rekonstruierte Version des Rests zu erhalten, und durch Kombinieren mindestens eines Referenzbilds mit der rekonstruierten Version des Rests, um eine rekonstruierte Version des Bilds zu erhalten, und wobei der Videodecodierer dafür konfiguriert ist, Pixel in der rekonstruierten Version des Bilds in Reaktion auf lokale geometrische Eigenschaften innerhalb einer jeweiligen von mehreren Kategorien zu klassifizieren, und wobei der Decodierer ein Filter (233) zum Filtern von Pixeln in der rekonstruierten Version des Bilds enthält, wobei die Vorrichtung **dadurch gekennzeichnet ist, dass**
- das Klassifizieren durch Anwenden einer Kantenerkennung auf die rekonstruierte Version des Bilds und durch das Klassifizieren von Pixeln bei erkannten Kanten in unterschiedliche Kategorien auf der Grundlage der Kantenorientierung ausgeführt wird; und
- das Filtern für nicht erkannte Kantenpixel durch ein Filter, das durch Block-adaptive Schleifenfilterung oder durch Quadtree-adaptive Schleifenfilterung trainiert worden ist, und für erkannte Kantenpixel durch ein adaptives Filter, dessen Struktur für alle innerhalb einer spezifischen Kategorie klassifizierte Pixel gewählt worden ist, ausgeführt wird.

4. Vorrichtung nach Anspruch 1 oder 3, wobei die Filterkoeffizienten adaptiv sind und in Reaktion auf die Lieferung einer verbesserten Leistung zum Filtern innerhalb mindestens einer der mehreren Kategorien gewählt werden.

5. Vorrichtung nach Anspruch 4, wobei die verbesserte Leistung durch Minimieren eines Verzerrungsmaßes zwischen dem Bild und der rekonstruierten Version des Bilds geliefert wird.

6. Vorrichtung nach Anspruch 1 oder 3, wobei die Filterkoeffizienten auf Bildgrundlage adaptiv trainiert werden und unter Verwendung eines oder mehrerer Elemente einer höheren Syntax signalisiert werden.

7. Vorrichtung nach Anspruch 1 oder 3, wobei die Filterkoeffizienten offline trainiert werden und sowohl bei dem Codierer als auch bei einem entsprechenden Decodierer gespeichert werden.

8. Verfahren in einem Videodecodierer, wobei das Verfahren umfasst:
Decodieren eines Bilds,
wobei der Schritt des Decodierens umfasst:
Empfangen (415) quantisierter Transformationskoeffizienten;
inverses Quantisieren und inverses Transformieren (415) der quantisierten Transformationskoeffizienten, um eine rekonstruierte Version des Rests zu erhalten;
Kombinieren (415) mindestens eines Referenzbilds mit der rekonstruierten Version des Rests, um eine rekonstruierte Version des Bilds zu erhalten;
Klassifizieren (420, 620, 820) von Pixeln in der rekonstruierten Version des Bilds innerhalb einer jeweiligen von mehreren Kategorien in Reaktion auf lokale geometrische Eigenschaften,
Filtern (450, 640, 850) von Pixeln in der rekonstruierten Version des Bilds,
wobei das Verfahren **dadurch gekennzeichnet ist, dass**
- das Klassifizieren durch Anwenden einer Kantenerkennung auf die rekonstruierte Version des Bilds und durch das Klassifizieren von Pixeln bei erkannten Kanten in unterschiedliche Kategorien auf der Grundlage der Kantenorientierung ausgeführt wird; und
- das Filtern für nicht erkannte Kantenpixel durch ein Filter, das durch Block-adaptive Schleifenfilterung oder durch Quadtree-adaptive Schleifenfilterung trainiert worden ist, und für erkannte Kantenpixel durch ein adaptives Filter, dessen Struktur für alle innerhalb einer spezifischen Kategorie klassifizierte Pixel gewählt worden ist, ausgeführt wird.

9. Verfahren nach Anspruch 2 oder 10, wobei die Filterkoeffizienten adaptiv sind und in Reaktion auf die Lieferung einer verbesserten Leistung zum Filtern innerhalb mindestens einer der mehreren Kategorien gewählt werden.

10. Verfahren nach Anspruch 9, wobei die verbesserte Leistung durch Minimieren eines Verzerrungsmaßes zwischen dem Bild und der rekonstruierten Version des Bilds geliefert wird.

11. Verfahren nach Anspruch 2 oder 8, wobei die Filterkoeffizienten auf Bildgrundlage adaptiv trainiert werden und unter Verwendung eines oder mehrerer Elemente einer höheren Syntax signalisiert werden.

12. Verfahren nach Anspruch 2 oder 8, wobei die Filterkoeffizienten offline trainiert werden und sowohl bei dem Codierer als auch bei einem entsprechenden Decodierer gespeichert werden.

13. Computerlesbare nichttransitorische Speichermedien, auf denen Videodaten codiert sind, wobei die Speichermedien umfassen:
ein Eingangsbild, das durch Transformieren und Quantisieren eines Rests des Eingangsbilds, um quantisierte Transformationskoeffizienten zu erhalten, durch inverses Quantisieren und inverses Transformieren der quantisierten Transformationskoeffizienten, um eine rekonstruierte Version des Rests zu erhalten, durch Kombinieren mindestens eines Referenzbilds mit der rekonstruierten Version des Rests, um eine rekonstruierte Version des Eingangsbilds zu erhalten, durch Klassifizieren von Pixeln in der rekonstruierten Version des Eingangsbilds innerhalb einer jeweiligen von mehreren Kategorien in Reaktion auf lokale geometrische Eigenschaften, und durch Filtern von Pixeln in der rekonstruierten Version des Eingangsbilds codiert worden ist,
wobei die computerlesbaren nichttransitorischen Speichermedium **dadurch gekennzeichnet sind, dass**
- das Klassifizieren durch Anwenden einer Kantenerkennung auf die rekonstruierte Version des Eingangsbilds und durch das Klassifizieren von Pixeln bei erkannten Kanten in unterschiedliche Kategorien auf der Grundlage der Kantenorientierung ausgeführt wird; und
- das Filtern für nicht erkannte Kantenpixel durch ein Filter, das durch Block-adaptive Schleifenfilterung oder durch Quadtree-adaptive Schleifenfilterung trainiert worden ist, und für erkannte Kantenpixel durch ein adaptives Filter, dessen Struktur für alle innerhalb einer spezifischen Kategorie klassifizierte Pixel gewählt worden ist, ausgeführt wird.

## Revendications

1. Appareil comprenant :
un codeur vidéo (100) pour coder une image d'entrée en transformant et en quantifiant un résidu de l'image d'entrée pour obtenir des coefficients de transformation quantifiés, en quantifiant et en transformant de manière inversée les coefficients de transformation quantifiés pour obtenir une version reconstruite du résidu, et en combinant au moins une image de référence à la version reconstruite du résidu pour obtenir une version reconstruite de l'image d'entrée, et, dans lequel ledit codeur vidéo est configuré pour classifier les pixels dans la version reconstruite de l'image d'entrée dans une catégorie respective d'une pluralité de catégories répondant à des caractéristiques géométriques locales, et dans lequel ledit codeur vidéo comprend un filtre (133) pour filtrer les pixels dans la version reconstruite de l'image d'entrée, ledit appareil étant **caractérisé en ce que** :
- la classification de pixels est effectuée en appliquant une détection de bords à la version reconstruite de l'image d'entrée, et en classifiant les pixels au niveau des bords détectés en différentes catégories selon l'orientation des bords ; et
- le filtrage est effectué pour les pixels de bords non détectés par filtrage à boucle adaptative par bloc ou filtrage à boucle adaptative par arbre quaternaire et pour les pixels de bords détectés par un filtre adaptatif dont la structure a été sélectionnée pour tous les pixels catégorisés dans une catégorie spécifique.

2. Dans un codeur vidéo, procédé comprenant :
le codage d'une image d'entrée,
dans lequel ladite étape de codage comprend :
la transformation et la quantification (315) d'un résidu de l'image d'entrée pour obtenir des coefficients de transformation quantifiés ;
la quantification inverse et la transformation inverse (315) des coefficients de transformation quantifiés pour obtenir une version reconstruite du résidu ;
la combinaison (315) d'au moins une image de référence à la version reconstruite du résidu pour obtenir une version reconstruite de l'image d'entrée ;
la classification (330, 530, 720) des pixels dans la version reconstruite de l'image d'entrée dans une catégorie respective d'une pluralité de catégories répondant à des caractéristiques géométriques locales,
le filtrage (350, 550, 765) des pixels dans la version reconstruite de l'image d'entrée, ledit procédé étant **caractérisé en ce que** :
- la classification est effectuée en appliquant une détection de bords à la version reconstruite de l'image d'entrée et en classifiant les pixels au niveau des bords détectés en différentes catégories selon l'orientation des bords ; et
- le filtrage est effectué pour les pixels de bords non détectés par un filtre formé par filtrage à boucle adaptative par bloc ou filtrage à boucle adaptative par arbre quaternaire et pour les pixels de bords détectés par un filtre adaptatif dont la structure a été sélectionnée pour tous les pixels catégorisés dans une catégorie spécifique.

3. Appareil comprenant :
un codeur vidéo (200) pour décoder une image en recevant des coefficients de transformation quantifiés, en quantifiant et en transformant de manière inversée les coefficients de transformation quantifiés pour obtenir une version reconstruite du résidu, et en combinant au moins une image de référence à la version reconstruite du résidu pour obtenir une version reconstruite de l'image, et, dans lequel ledit décodeur vidéo est configuré pour classifier les pixels dans la version reconstruite de l'image dans une catégorie respective d'une pluralité de catégories répondant à des caractéristiques géométriques locales, et dans lequel ledit décodeur comprend un filtre (233) pour filtrer les pixels dans la version reconstruite de l'image, ledit appareil étant **caractérisé en ce que** :
- la classification est effectuée en appliquant une détection de bords à la version reconstruite de l'image et en classifiant les pixels au niveau des bords détectés en différentes catégories selon l'orientation des bords ; et
- le filtrage est effectué pour les pixels de bords non détectés par un filtre formé par filtrage à boucle adaptative par bloc ou filtrage à boucle adaptative par arbre quaternaire et pour les pixels de bords détectés par un filtre adaptatif dont la structure a été sélectionnée pour tous les pixels catégorisés dans une catégorie spécifique.

4. Appareil selon les revendications 1 ou 3, dans lequel les coefficients de filtre sont adaptatifs et sont sélectionnés en réponse à la fourniture de performances améliorées de filtrage dans au moins une catégorie de la pluralité de catégories.

5. Appareil selon la revendication 4, dans lequel les performances améliorées sont fournies en minimisant une mesure de distorsion entre l'image et la version reconstruite de l'image.

6. Appareil selon les revendications 1 ou 3, dans lequel les coefficients de filtre sont formés de façon adaptative sur la base d'une image et signalés à l'aide d'un ou de plusieurs éléments de syntaxe de haut niveau.

7. Appareil selon les revendications 1 ou 3, dans lequel les coefficients de filtre sont formés hors ligne et stockés sur le codeur et un décodeur correspondant.

8. Dans un décodeur vidéo, procédé comprenant :
le décodage d'une image,
dans lequel ladite étape de décodage comprend :
la réception (415) de coefficients de transformation quantifiés ;
la quantification inverse et la transformation inverse (415) des coefficients de transformation quantifiés pour obtenir une version reconstruite du résidu ;
la combinaison (415) d'au moins une image de référence à la version reconstruite du résidu pour obtenir une version reconstruite de l'image ;
la classification (420, 620, 820) des pixels dans la version reconstruite de l'image dans une catégorie respective d'une pluralité de catégories répondant à des caractéristiques géométriques locales,
le filtrage (450, 640, 850) des pixels dans la version reconstruite de l'image, ledit procédé étant **caractérisé en ce que** :
- la classification est effectuée en appliquant une détection de bords à la version reconstruite de l'image et en classifiant les pixels au niveau des bords détectés en différentes catégories selon l'orientation des bords ; et
- le filtrage est effectué pour les pixels de bords non détectés par un filtre formé par filtrage à boucle adaptative par bloc ou filtrage à boucle adaptative par arbre quaternaire et pour les pixels de bords détectés par un filtre adaptatif dont la structure a été sélectionnée pour tous les pixels catégorisés dans une catégorie spécifique.

9. Procédé selon les revendications 2 ou 10, dans lequel les coefficients de filtre sont adaptatifs et sont sélectionnés en réponse à la fourniture de performances améliorées de filtrage dans au moins une catégorie de la pluralité de catégories.

10. Procédé selon la revendication 9, dans lequel les performances améliorées sont fournies en minimisant une mesure de distorsion entre l'image et la version reconstruite de l'image.

11. Procédé selon les revendications 2 ou 8, dans lequel les coefficients de filtre sont formés de façon adaptative sur la base d'une image et signalés à l'aide d'un ou de plusieurs éléments de syntaxe de haut niveau.

12. Procédé selon les revendications 2 ou 8, dans lequel les coefficients de filtre sont formés hors ligne et stockés sur le codeur et un décodeur correspondant.

13. Support de stockage non transitoire lisible par ordinateur incluant des données de signal vidéo codées, comprenant :
une image d'entrée codée en transformant et en quantifiant un résidu de l'image d'entrée pour obtenir des coefficients de transformation quantifiés, en quantifiant et en transformant de manière inversée les coefficients de transformation quantifiés pour obtenir une version reconstruite du résidu, en combinant au moins une image de référence à la version reconstruite du résidu pour obtenir une version reconstruite de l'image d'entrée, en classifiant les pixels dans la version reconstruite de l'image d'entrée dans une catégorie respective d'une pluralité de catégories répondant à des caractéristiques géométriques locales, et en filtrant les pixels dans la version reconstruite de l'image d'entrée,
ledit support de stockage non transitoire lisible par ordinateur étant **caractérisé en ce que** :
- la classification est effectuée en appliquant une détection de bords à la version reconstruite de l'image d'entrée et en classifiant les pixels au niveau des bords détectés en différentes catégories selon l'orientation des bords ; et
- le filtrage est effectué pour les pixels de bords non détectés par filtrage à boucle adaptative par bloc ou filtrage à boucle adaptative par arbre quaternaire et pour les pixels de bords détectés par un filtre adaptatif dont la structure a été sélectionnée pour les pixels catégorisés dans une catégorie spécifique.
